# EUROPEAN PATENT APPLICATION

(11) **EP 4 398 387 A1**
(43) Date of publication of application: **10.07.2024**
(21) Application number: 22936736.2
(22) Date of filing: 09.12.2022
(51) Int. Cl.: H01M 50/147

(54) **TOP COVER STRUCTURE AND BATTERY**

(30) Priority: 21.11.2022 CN 202223092310 U
(71) Applicant: Eve Energy Co., Ltd., Huizhou, Guangdong 516006 (CN)
(72) Inventor: LIU, Liangliang, Huizhou, Guangdong 516006 (CN); ZHU, Yuan, Huizhou, Guangdong 516006 (CN); BU, Fang, Huizhou, Guangdong 516006 (CN)
(74) Representative: Grünecker Patent- und Rechtsanwälte PartG mbB
(86) International application number: PCT/CN2022/137782
(87) International publication number: WO 2024/108665

(57) **Abstract**

Provided is a top cover structure. The top cover structure includes a top cover and a pole assembly. The top cover includes a body and an outer protrusion portion. The outer protrusion portion is ringed at the edge of the body and protrudes in a direction facing away from a cell. An end of the outer protrusion portion is provided with a welding portion. The welding portion is welded to a housing of a battery. The body is formed with an assembly hole. The pole assembly is configured to seal the assembly hole. The welding portion is disposed away from the battery cell, that is, the distance between the welding portion and the internal component of the battery is increased. In this manner, it is possible to prevent welding heat from being transferred to the inside of the battery, thereby avoiding damage to the internal component. Thus, the sealing property between the top cover structure and the housing is ensured, and at the same time, the quality of the battery is ensured. A battery is also provided. The battery includes a housing and the preceding top cover structure. The housing includes a port portion. An end of the port portion is welded to a welding portion along a circumference of the welding portion.

## Description

This application claims priority to Chinese Patent Application No. 202223092310.X filed with the China National Intellectual Property Administration (CNIPA) on Nov. 21, 2022, the disclosure of which is incorporated herein by reference in its entirety.

### TECHNICAL FIELD

The present application relates to the field of battery technology, for example, a top cover structure and a battery.

### BACKGROUND

In battery packaging, it is necessary to connect the top cover of the battery with the housing of the battery in a sealed manner. As for sealing the housing with the top cover by riveting, the top cover and the housing are easy to be poorly sealed. As for sealing the housing with the top cover in the case where an electrolyte is injected, the inside of the battery is also prone to a bulging problem. As for sealing the housing with the top cover by welding, in the related art, the edge of the top cover is welded to the edge of the upper end of the housing to implement sealing. In this manner, welding heat is easily transferred to an internal component such as a diaphragm, and as a result, damage to the internal component is easily caused.

Therefore, there is an urgent need for a top cover structure and a battery to solve the above problems.

### SUMMARY

The present application provides a top cover structure to prevent a sealing welding process from causing damage to the internal component of a battery and ensure the quality of the battery.

In a first aspect, an embodiment of the present application provides a top cover structure.

The top cover includes a body and an outer protrusion portion. The outer protrusion portion is ringed at the edge of the body and protrudes in a direction facing away from a cell of a battery. An end of the outer protrusion portion is provided with a welding portion. The welding portion is welded to a housing of the battery. The body is formed with an assembly hole.

The pole assembly configured to seal the assembly hole.

In an embodiment, the top cover also includes an inner protrusion portion. The inner protrusion portion protrudes in a direction facing the cell. The inner protrusion portion is ringed on the body. The inner protrusion portion is connected to the outer protrusion portion. The outer protrusion portion is located on the outer side of the inner protrusion portion.

In an embodiment, the outer protrusion portion and the inner protrusion portion are formed by bending the top cover.

In an embodiment, the pole assembly includes a base and a pressure ring connected to each other. The base is disposed through the assembly hole. The pressure ring is disposed on the side of the body facing away from the cell. The pressure ring is located at an end of the base.

In an embodiment, the pressure ring has a protrusion portion. The protrusion portion protrudes toward the cell. The protrusion portion is riveted on the base.

In an embodiment, the pressure ring has a central hole. The base is partially riveted in the central hole. The side of the pressure ring facing away from the cell is flush with the end of the base.

In an embodiment, the protrusion portion is disposed on the inner ring of the pressure ring.

In an embodiment, the base includes a connection portion and an insertion portion. The diameter of the connection portion is greater than the diameter of the assembly hole. The connection portion is disposed on the side of the body adjacent to the cell. The insertion portion is disposed in the assembly hole.

In an embodiment, the pole assembly also includes a sealing member. The sealing member includes a sealing body, a first sealing plate, and a second sealing plate. The first sealing plate and the second sealing plate are disposed at two ends of the sealing body respectively. A through hole is provided extending through the sealing body. Two ends of the through hole extend through the first sealing plate and the second sealing plate respectively. The pressure ring abuts against the first sealing plate. The connection portion abuts against the second sealing plate. The insertion portion is inserted into the through hole.

An embodiment of the present application provides a battery to prevent the sealing welding process of the top cover structure from causing damage to the internal component of the battery and ensure the quality of the battery.

An embodiment of the present application provides a battery. The battery includes a housing and the preceding top cover structure. The housing includes a port portion. An end of the port portion is welded to a welding portion along a circumference of the welding portion.

In an embodiment, the housing also includes a housing body. The port portion is connected to the end of the housing body adjacent to the top cover structure. The diameter of the inner wall of the port portion is greater than the diameter of the inner wall of the housing body. The outer protrusion portion abuts against the port portion. The thickness of the port portion is less than the thickness of the housing body.

In an embodiment, the battery also includes a negative electrode tab. The negative electrode tab is partially interposed between the port portion and the outer protrusion portion. An end of the negative electrode tab is welded to the port portion and the welding portion.

The present application has the beneficial effects below.

The present application provides a top cover structure. The top cover structure includes a top cover and a pole assembly. The top cover includes a body and an outer protrusion portion. The outer protrusion portion is ringed at the edge of the body and protrudes in the direction facing away from the cell. The end of the outer protrusion portion is provided with the welding portion. The welding portion is welded to the housing of the battery. The body is formed with the assembly hole. The pole assembly is configured to seal the assembly hole. The welding portion is disposed away from the battery cell, that is, the distance between the welding portion and the internal component of the battery is increased. In this manner, it is possible to prevent welding heat from being transferred to the inside of the battery, thereby avoiding damage to the internal component. Thus, the sealing property between the top cover structure and the housing is ensured, and at the same time, the quality of the battery is ensured.

The present application provides a battery. The battery includes a housing and the preceding top cover structure. The housing includes a port portion. The end of the port portion is circumferentially welded to the welding portion. That is, the welding area of the housing and the top cover structure is beyond the top cover and has a great distance from the internal component of the battery. In this manner, it is possible to prevent welding heat from damaging the internal component of the battery, and the quality of the battery is ensured.

### BRIEF DESCRIPTION OF DRAWINGS

FIG. 1 is a section view of a top cover structure according to an embodiment of the present application.
FIG. 2 is an exploded view of a top cover structure according to an embodiment of the present application.
FIG. 3 is a diagram illustrating the structure of the primary riveting process of a top cover structure according to an embodiment of the present application.
FIG. 4 is a diagram illustrating the structure of the welding process of a top cover structure according to an embodiment of the present application.
FIG. 5 is a diagram illustrating the structure of the secondary riveting process of a top cover structure according to an embodiment of the present application.
FIG. 6 is a diagram illustrating the structure of a process of a cell placing into the housing according to an embodiment of the present application.
FIG. 7 is a diagram illustrating the structure of the sealing welding process of a battery according to an embodiment of the present application.
FIG. 8 is a diagram illustrating the structure of the liquid injection sealing process of a battery according to an embodiment of the present application.

### Reference list

- 1: top cover structure
- 11: top cover
- 111: outer protrusion portion
- 1111: welding portion
- 112: inner protrusion portion
- 113: body
- 12: pole assembly
- 121: base
- 1211: connection portion
- 1212: insertion portion
- 1213: riveting portion
- 122: pressure ring
- 1221: protrusion portion
- 1222: welding point
- 12201: central hole
- 123: sealing member
- 1231: sealing body
- 1232: first sealing plate
- 1233: second sealing plate
- 12301: through hole
- 2: housing
- 21: port portion
- 22: housing body
- 3: negative electrode tab
- 4: positive electrode tab
- 5: diaphragm
- 6: negative electrode
- 7: positive electrode
- 8: blocking member

### DETAILED DESCRIPTION

In the description of the present application, it is to be noted that terms such as "mounted", "joined", and "connected" are to be understood in a broad sense unless otherwise expressly specified and limited. For example, the term "connected" may refer to "securely connected" or "detachably connected"; may refer to "mechanically connected" or "electrically connected"; or may refer to "connected directly", "connected indirectly through an intermediary", or "connected in two components". For those of ordinary skill in the art, specific meanings of the preceding terms in the present application may be construed according to specific circumstances.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

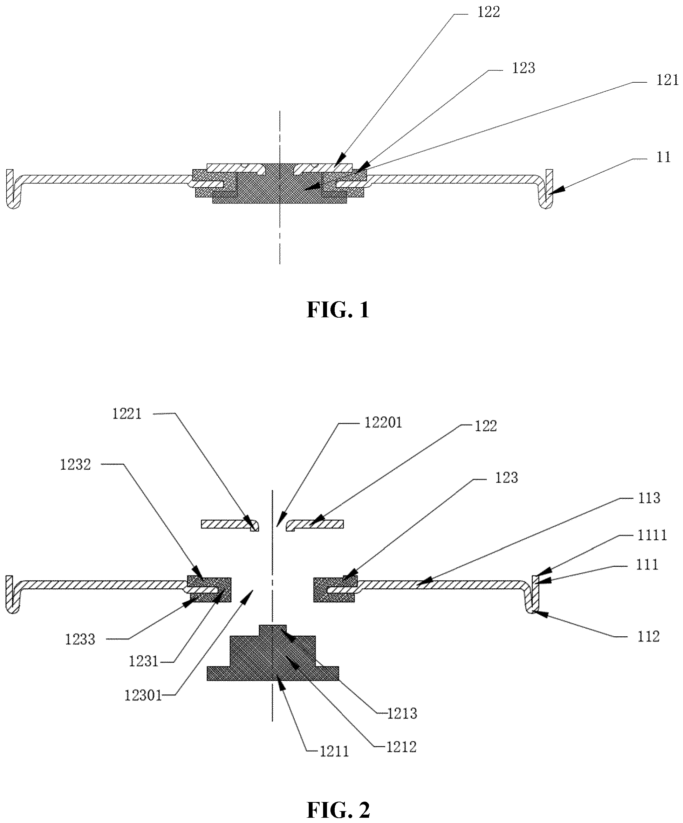

As shown in FIGS. 1 to 2, in an embodiment, the top cover structure 1 includes a top cover 11 and a pole assembly 12. The top cover 11 includes a body 113 and an outer protrusion portion 111. The outer protrusion portion 111 is ringed at the edge of the body 113 and protrudes in a direction facing away from a cell. An end of the outer protrusion portion 111 is provided with a welding portion 1111. The welding portion 1111 is welded to a housing 2 of a battery. The body 113 is formed with an assembly hole. The pole assembly 12 is configured to seal the assembly hole. The welding portion 1111 is disposed away from the battery cell, that is, the distance between the welding portion 1111 and the internal component of the battery is increased. In this manner, it is possible to prevent welding heat from being transferred to the inside of the battery, thereby avoiding damage to the internal component. Thus, both the sealing property between the top cover structure 1 and the housing 2 is ensured and the quality of the battery is ensured.

In an embodiment, the top cover 11 also includes an inner protrusion portion 112. The inner protrusion portion 112 protrudes in a direction facing the cell. The inner protrusion portion 112 is ringed on the body 113 and connected to the outer protrusion portion 111. The outer protrusion portion 111 is located on the outer side of the inner protrusion portion 112. In an embodiment, the outer protrusion portion 111 and the inner protrusion portion 112 are formed by bending the top cover 11. That is, the structural strength of the outer protrusion portion 111 may be enhanced, thereby enhancing the resistance of the top cover 11 in the radial direction. Compared with the case where the top cover is directly bent to form the outer protrusion portion 111, the inner protrusion portion 112 is disposed, so that the bending portion of the top cover 11 is not easy to fracture due to force. In addition, the outer wall surface of the outer protrusion portion 111 is flush with the outer wall surface of the inner protrusion portion 112, and the outer wall surface of the outer protrusion portion 111 abuts against the inner wall surface of the housing 2. Compared with the case where only the outer protrusion portion 111 is disposed, the inner protrusion portion 112 is added. It is beneficial to increase the contact area between the top cover 11 and the housing 2 and increase the stability of the connection.

As shown in FIG. 2, in an embodiment, the pole assembly 12 includes a base 121 and a pressure ring 122 connected to each other. The base 121 is disposed through the assembly hole. The pressure ring 122 is disposed on the side of the body 113 facing away from the cell and located at an end of the base 121.

In an embodiment, the pressure ring 122 has a protrusion portion 1221. The protrusion portion 1221 protrudes toward the cell. The protrusion portion 1221 is riveted on the base 121 to ensure that the pressure ring 122 is firmly connected to the base 121. In an embodiment, the material hardness of the protrusion portion 1221 is higher than the material hardness of the base 121.

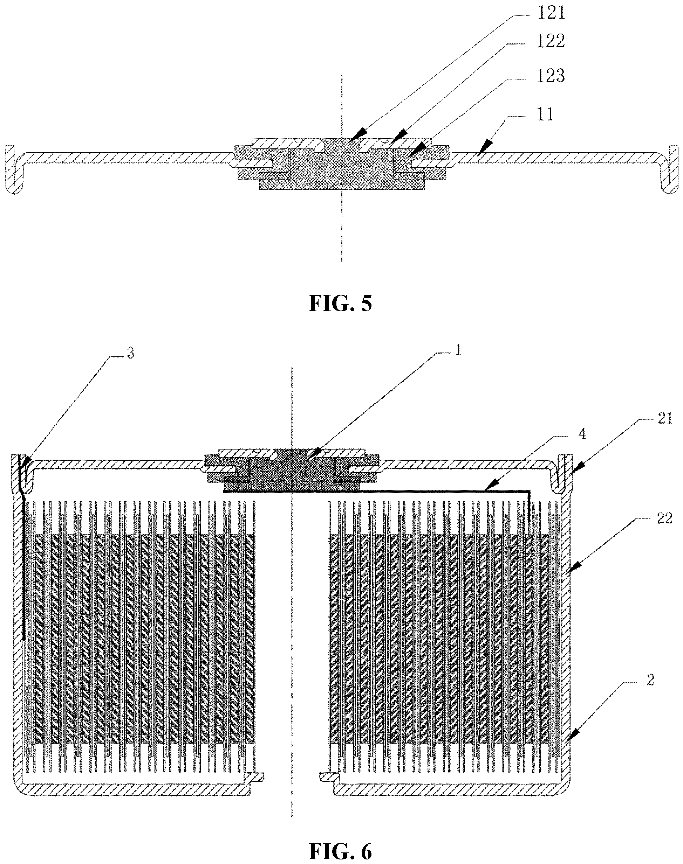

In an embodiment, the pressure ring 122 has a central hole 12201. As shown in FIG. 5, the base 121 is partially riveted in the central hole 12201. The side of the pressure ring 122 facing away from the cell is flush with the end of the base 121 to increase the riveting strength. In this manner, it is ensured that the base 121 is firmly connected to the pressure ring 122.

In an embodiment, the protrusion portion 1221 is disposed on the inner ring of the pressure ring 122. Of course, in other embodiments, the protrusion portion 1221 may be ringed at the part between the inner ring of the pressure ring 122 and the outer ring of the pressure ring 122, as long as the protrusion portion 1221 can abut against the base 121.

In an embodiment, the material of the compression ring 122 is stainless steel or aluminum alloy.

In an embodiment, the base 121 includes a connection portion 1211 and an insertion portion 1212. The diameter of the connection portion 1211 is greater than the diameter of the assembly hole. The connection portion 1211 is disposed on the side of the body 113 adjacent to the cell. The insertion portion 1212 is disposed in the assembly hole. The base 121 also includes a riveting portion 1213. The riveting portion 1213 and the connection portion 1211 are disposed at two ends of the insertion portion 1212 respectively. The diameter of the riveting portion 1213 is less than the diameter of the insertion portion 1212. The diameter of the insertion portion 1212 is less than the diameter of the connection portion 1211. In this manner, the pressure ring 122 abuts against the step surface between the riveting portion 1213 and the connection portion 1211.

In an embodiment, the base 121 is generally made of aluminum and aluminum alloy to ensure that the material hardness of the base 121 is lower than the material hardness of the pressure ring 122.

As shown in FIG. 2, to ensure a sealed connection between the pole assembly 12 and the top cover 11, in an embodiment, the pole assembly 12 also includes a sealing member 123. The sealing member 123 includes a sealing body 1231, a first sealing plate 1232, and a second sealing plate 1233. The first sealing plate 1232 and the second sealing plate 1233 are disposed at two ends of the sealing body 1231 respectively. The sealing body 1231 is formed with a through hole 12301 extending through the sealing body 1231. Two ends of the through hole 12301 extend through the first sealing plate 1232 and the second sealing plate 1233 respectively. The pressure ring 122 abuts against the first sealing plate 1232 to form the first sealing surface. The connection portion 1211 abuts against the second sealing plate 1233 to form the last sealing surface. The insertion portion 1212 is inserted into the through hole 12301. In an embodiment, the insertion portion 1212 has an interference fit with the through hole 12301 to form the tubular second sealing surface to ensure the sealing property between the pole assembly 12 and the top cover 11.

The assembly process of the top cover structure 1 includes primary riveting, welding, and secondary riveting.

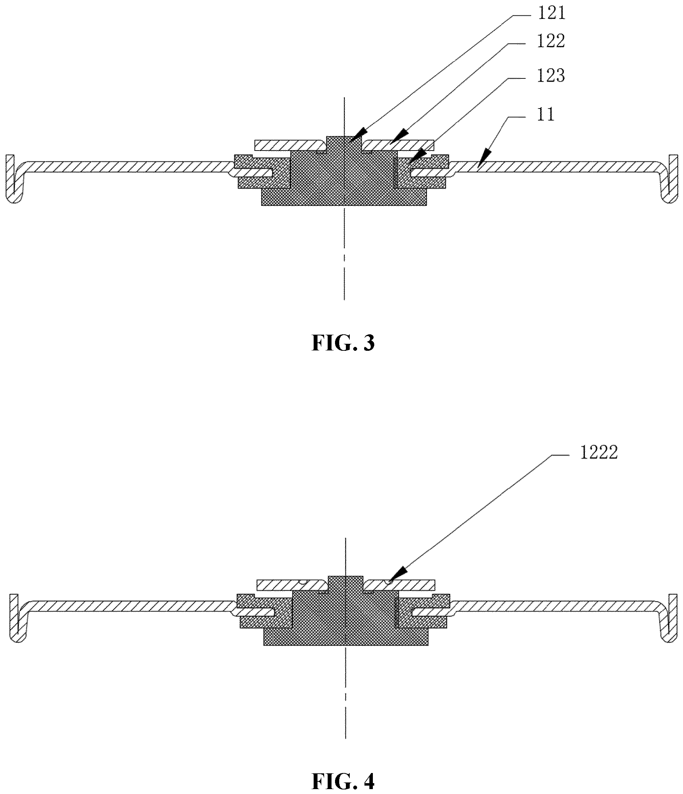

As shown in FIG. 3, to simplify the assembly process, the sealing member 123 and the top cover 11 are an injection molded integrated member. First, the base 121 is inserted into the through hole 12301 of the sealing member 123, the pressure ring 122 sleeves the riveting portion 1213 of the base 121, and the riveting portion 1213 protrudes from the pressure ring 122. Then, the pressure ring 122 and the base 121 are riveted, and since the material hardness of the pressure ring 122 is greater, the protruding portion 1221 of the pressure ring 122 is riveted into the step surface of the base 121.

As shown in FIG. 4, next, the pressure ring 122 is welded and secured to the step surface of the base 121. In an embodiment, the welding area may be multiple welding points 1222. The multiple welding points 1222 may form an annular welding area.

As shown in FIG. 5, finally, secondary riveting is performed on the pressure ring 122 and the base 121, so that an end of the riveting portion 1213 is flush with the pressure ring 122, and the riveting portion 1213 fills the central hole 12201 of the pressure ring 122, thereby ensuring the flatness of the electrical connection between the pole assembly 12 and the outside.

The top cover structure 1 provided in this embodiment is simple in manufacturing process and low in costs. Compared with the top cover structure in the related art, the overall thickness of the top cover structure can be reduced by about 0.7 mm, and the diameter or width can be reduced to 2.5 mm. The top cover structure is suitable for batteries of different shapes, such as a bean type, a column type, and a square type. The top cover structure 1 can effectively increase the internal space of the battery and increase the design capacity of the battery.

An embodiment provides a battery. As shown in FIGS. 6 to 8, the battery includes a housing 2 and the preceding top cover structure 1. The housing 2 includes a port portion 21. An end of the port portion 21 is welded to the welding portion 1111 along a circumference of the welding portion 1111. The welding portion 1111 of the top cover 11 is beyond the top cover 11, that is, the welding area of the housing 2 and the top cover structure 1 is beyond the top cover 11 and has a great distance from the internal component of the battery. In this manner, it is possible to prevent welding heat from damaging the internal component of the battery and ensure the quality of the battery.

In an embodiment, the housing 2 also includes a housing body 22. The port portion 21 is connected to the end of the housing body 22 adjacent to the top cover structure 1. The diameter of the inner wall of the port portion 21 is greater than the diameter of the inner wall of the housing body 22. The outer protrusion portion 111 abuts against the port portion 21. In an embodiment, the outer protrusion portion 111 and the inner protrusion portion 112 abut against the port portion 21.

In an embodiment, the height of the outer wall surface of the outer protrusion portion 111 and the height of the outer wall surface of the inner protrusion portion 112 are consistent with the height of the port portion 21, so that the end of the inner protrusion portion 112 is located at the junction between the port portion 21 and the housing body 22, thereby limiting the movement range of the top cover 11 relative to the housing 2. In an embodiment, the thickness of the port portion 21 is less than the thickness of the housing body 22, so that the diameter of the outer wall of the port portion 21 may be prevented from being excessively great. In this manner, the weight of the battery is reduced, and at the same time, the energy density of the battery is ensured.

In an embodiment, the battery also includes a negative electrode tab 3. The negative electrode tab 3 is partially interposed between the port portion 21 and the outer protrusion portion 111. Thus, the negative electrode tab 3 is secured, and the contact area between the negative electrode tab 3 and the port portion 21 and the top cover 11 is increased, thereby ensuring a current flux. An end of the negative electrode tab 2 is welded to the port portion 21 and the welding portion 111 to ensure the firmness of the connection of the negative electrode tab 3.

The battery also includes a positive electrode tab 4 and a cell. The cell includes a diaphragm 5, a negative electrode 6, a positive electrode 7, and an insulating gasket. The positive electrode tab 4 is welded to the bottom surface of the connection portion 1211 of the base 121. The area of the bottom surface of the connection portion 1211 is relatively great, so that the welding difficulty can be reduced, and the current flux can be ensured.

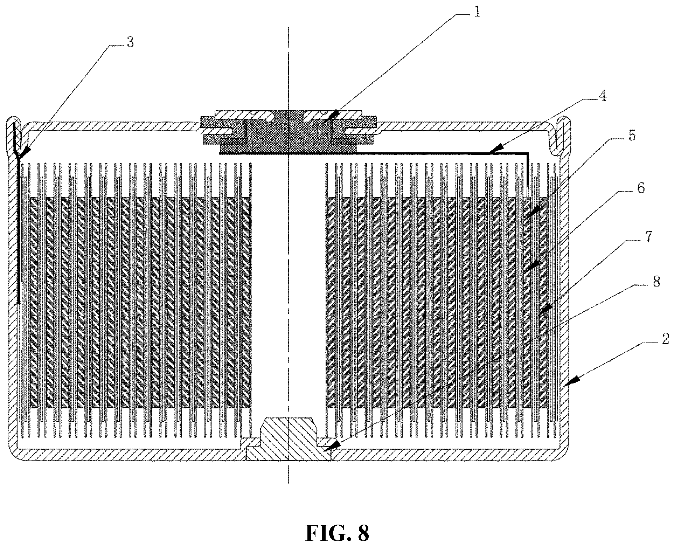

In an embodiment, the bottom surface of the housing 2 of the battery is formed with a liquid injection hole. The periphery of the liquid injection hole is provided with a step surface to protrude toward the inside of the battery. As shown in FIG. 8, the battery also includes a T-shaped blocking member 8. The blocking member 8 fits against the step surface. One end of the blocking member 8 is flush with the bottom surface of the housing 2, and the other end of the blocking member 8 is inserted into the housing 2. In an embodiment, the blocking member 8 has an interference fit with the housing 2 and is connected to the housing 2 by welding to ensure the sealing property here.

The assembly process of the battery includes cell winding forming, cell encasing, sealing welding, and liquid injection sealing.

As shown in FIG. 6, the cell is wound and formed and then insulated and put into the housing 2. The positive electrode tab 4 is welded to the base 121. Then, the negative electrode tab 3 is led out. A top cover assembly is placed at the opening of the housing 2. The welding portion 1111 of the top cover assembly is flush with the port portion 21 of the housing 2. The negative electrode tab 3 is partially located between the port portion 21 and the outer protrusion portion 111.

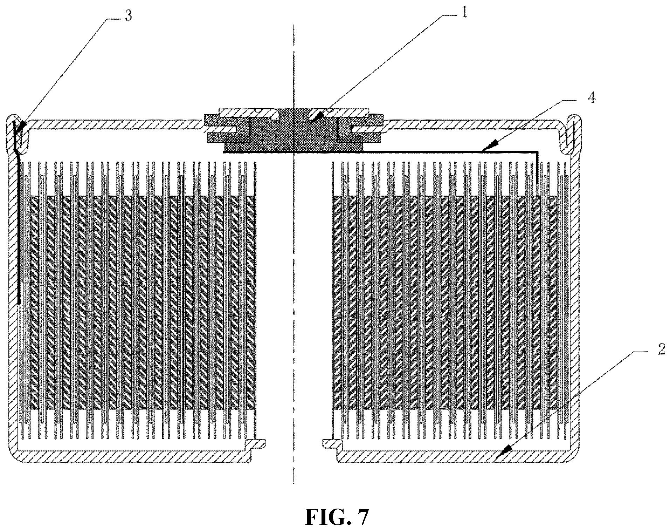

As shown in FIG. 7, the welding portion 1111 of the top cover assembly and the port portion 21 of the housing 2 are sealed and welded, and it is ensured that the negative electrode tab 3 is connected to the welding portion 1111 and the port portion 21 by welding.

As shown in FIG. 8, finally, liquid injection is performed. After liquid injection is completed, the blocking member 8 is blocked at the liquid injection hole, and the blocking member 8 is sealed and welded by laser welding.

Compared with the battery in the related art, the battery provided by this embodiment is simple in manufacturing process, high in production efficiency, light in weight, and high in energy density.

## Claims

1. Atop cover structure, comprising:
a top cover (11) comprising a body (113) and an outer protrusion portion (111), wherein the outer protrusion portion (111) is ringed at an edge of the body (113), the outer protrusion portion (111) protrudes in a direction facing away from a cell of a battery, an end of the outer protrusion portion (111) is provided with a welding portion (1111), the welding portion (1111) is welded to a housing (2) of the battery, and the body (113) is formed with an assembly hole; and
a pole assembly (12) configured to seal the assembly hole.

2. The top cover structure according to claim 1, further comprising an inner protrusion portion (112) protruding in a direction facing the cell, wherein the inner protrusion portion (112) is ringed on the body (113), the inner protrusion portion (112) is connected to the outer protrusion portion (111), and the outer protrusion portion (111) is located on an outer side of the inner protrusion portion (112).

3. The top cover structure according to claim 2, wherein the outer protrusion portion (111) and the inner protrusion portion (112) are formed by bending the top cover (11).

4. The top cover structure according to any one of claims 1 to 3, wherein the pole assembly (12) comprises a base (121) and a pressure ring (122) connected to each other, the base (121) is disposed through the assembly hole, the pressure ring (122) is disposed on a side of the body (113) facing away from the cell, and the pressure ring (122) is located at an end of the base (121).

5. The top cover structure according to claim 4, wherein the pressure ring (122) has a protrusion portion (1221) protruding toward the cell, and the protrusion portion (1221) is riveted on the base (121).

6. The top cover structure according to claim 5, wherein the pressure ring (122) has a central hole (12201), the base (121) is partially riveted in the central hole (12201), and a side of the pressure ring (122) facing away from the cell is flush with the end of the base (121).

7. The top cover structure according to claim 6, wherein the protrusion portion (1221) is disposed on an inner ring of the pressure ring (122).

8. The top cover structure according to claim 4, wherein the base (121) comprises a connection portion (1211) and an insertion portion (1212), a diameter of the connection portion (1211) is greater than a diameter of the assembly hole, the connection portion (1211) is disposed on a side of the body (113) adjacent to the cell, and the insertion portion (1212) is disposed in the assembly hole.

9. The top cover structure according to claim 8, wherein the pole assembly (12) further comprises a sealing member (123), and the sealing member (123) comprises a sealing body (1231), a first sealing plate (1232), and a second sealing plate (1233), wherein the first sealing plate (1232) and the second sealing plate (1233) are disposed at two ends of the sealing body (1231) respectively, a through hole (12301) is provided extending through the sealing body (1231), two ends of the through hole (12301) extend through the first sealing plate (1232) and the second sealing plate (1233) respectively, the pressure ring (122) abuts against the first sealing plate (1232), the connection portion (1211) abuts against the second sealing plate (1233), and the insertion portion (1212) is inserted into the through hole (12301).

10. A battery, comprising a housing (2) and the top cover structure according to any one of claims 1 to 9, wherein the housing (2) comprises a port portion (21), and an end of the port portion (21) is welded to a welding portion (1111) along a circumference of the welding portion (111).

11. The battery according to claim 10, wherein the housing (2) further comprises a housing body (22), the port portion (21) is connected to an end of the housing body (22) adjacent to the top cover structure (1), a diameter of an inner wall of the port portion (21) is greater than a diameter of an inner wall of the housing body (22), the outer protrusion portion (111) abuts against the port portion (21), and a thickness of the port portion (21) is less than a thickness of the housing body (22).

12. The battery according to claim 10, further comprising a negative electrode tab (3) partially interposed between the port portion (21) and the outer protrusion portion (111), wherein an end of the negative electrode tab (3) is welded to the port portion (21) and the welding portion (1111).
